# FASCICULE DE BREVET EUROPEEN

(11) **EP 0 953 737 B1**
(45) Date de publication et mention de la délivrance du brevet: **15.10.2003**
(21) Numéro de dépôt: 99400919.9
(22) Date de dépôt: 15.04.1999
(51) Int. Cl.: F01N 3/02, B01D 46/24, F01N 9/00

(54) **Procédé et dispositif de régénération locale et controlée d'un filtre à particules**
Verfahren und Vorrichtung zur örtlichen überwachten Regenerierung eines Partikelfilters
Process and device for the local and controlled regeneration of a particles filter

(30) Priorité: 29.04.1998 FR 9805361
(43) Date de publication de la demande: 03.11.1999
(73) Titulaire: Institut Français du Pétrole, 92852 Rueil-Malmaison Cedex (FR)
(72) Inventeur: Dementhon, Jean-Baptiste, 75011 Paris (FR); Martin, Brigitte, 69230 Saint Genis Laval (FR); Bourry, Bruno, 07290 Quintenas (FR)

(56) Documents cités:
- EP-A- 0 449 791
- EP-A- 0 703 352
- EP-A- 0 829 622
- US-A- 4 656 832
- PATENT ABSTRACTS OF JAPAN vol. 018, no. 076 (M-1556), 8 février 1994 (1994-02-08) -& JP 05 288038 A (TOYOTA MOTOR CORP), 2 novembre 1993 (1993-11-02)
- PATENT ABSTRACTS OF JAPAN vol. 009, no. 290 (M-430), 16 novembre 1985 (1985-11-16) -& JP 60 128920 A (MAZDA KK), 10 juillet 1985 (1985-07-10)

## Description

La présente invention concerne le domaine des filtres à particules et plus particulièrement de la détermination de leur encrassement.

Ces éléments filtrants sont généralement disposés dans les lignes d'échappement de moteur à combustion interne, et ils sont destinés à capter et/ou à éliminer certaines particules contenues dans le flux gazeux, afin que la ligne d'échappement rejette, en aval c'est-à-dire à l'atmosphère, un gaz épuré desdites particules.

L'encrassement apparaît donc comme un problème capital pour les filtres à particules, et différentes méthodes et/ou dispositifs ont déjà été mis au point avec l'objectif constant de régénérer le filtre.

Il peut s'agir, selon un concept connu, de brûler périodiquement les dépôts de suie.

Cette combustion se produit parfois naturellement lorsque la température des gaz atteint d'elle-même le niveau requis pour initier l'oxydation des particules. Cependant, les conditions de fonctionnement moyennes aboutissent généralement à des températures trop faibles pour initier spontanément la combustion des particules. Ceci conduit alors à un colmatage du filtre, ce qui est pénalisant pour le bon rendement du moteur, et menace à terme son fonctionnement. Il est alors nécessaire d'assurer artificiellement et arbitrairement la régénération complète du filtre.

De nombreuses techniques ont été développées dans ce sens. Elles peuvent être basées sur des modifications du fonctionnement moteur : vannage à l'admission, vannage à l'échappement, retard de l'avance à l'injection, ou encore liées à un apport d'énergie dans les gaz d'échappement ou au niveau du filtre (résistance électrique, brûleur, micro-ondes...). Il est alors nécessaire de piloter ces différents dispositifs par une commande extérieure prise en charge par un calculateur. Le plus souvent, le critère retenu pour le déclenchement de la régénération est la contre-pression dans la ligne d'échappement.

Pour faciliter la régénération des filtres à particules, une approche différente et complémentaire, de nature chimique, consiste à ajouter au carburant un additif par exemple organo-métallique, qui se retrouve dans le dépôt de suies ce qui conduit généralement à une baisse de la température d'allumage et donc à une augmentation de la fréquence de régénération.

Parmi les produits le plus fréquemment utilisé comme additifs, on peut citer le cuivre, le fer, le cérium, le sodium.... Des études montrent qu'en présence de tels additifs, des régénérations partielles peuvent survenir spontanément pour des températures de gaz d'échappement relativement faibles (~ 200°C).

Néanmoins, pour certains types de conduites, des problèmes liés à la contre-pression peuvent subsister de sorte qu'un apport extérieur d'énergie peut s'avérer nécessaire, comme par exemple le recours au chauffage électrique.

En ce qui concerne la consommation d'énergie, la plupart des systèmes connus utilisant le réchauffage électrique du filtre réalisent un chauffage global de l'élément filtrant. Ceci entraîne une forte consommation d'énergie, plus ou moins maîtrisée. Généralement la puissance électrique nécessaire pour déclencher une régénération totale du filtre est importante et souvent difficilement compatible avec les ressources électriques embarquées sur le véhicule. Le brevet EP-B1-0 485 179 illustre un système basé sur ce principe.

La demande de brevet français EN. 96/13855 déposée au nom de la demanderesse décrit un concept qui permet d'adapter la puissance électrique et la répartition d'énergie dans le filtre à toutes les conditions de fonctionnement du véhicule. Ce concept consiste à diviser l'ensemble de filtration en plusieurs zones, à équiper chacune desdites zones d'une résistance et, ayant détecté l'encrassement global de l'ensemble de filtration, à activer sélectivement une ou plusieurs résistances. Des vannes sont en outre associées aux résistances afin de renforcer ou d'atténuer l'effet des résistances.

Cette modulation de la régénération est toutefois basée sur une évaluation générale et globale de l'encrassement.

Par ailleurs, les conditions de la régénération peuvent être fortement dépendantes de l'état d'encrassement du filtre. D'une façon générale, le chauffage électrique ne permet pas d'agir de façon modulable en fonction de l'encrassement du filtre.

Il est également connu par le document JP-A-05288038 un dispositif de purification de gaz d'échappement comprenant un filtre à particules séparé en deux zones traversées de part en part par les gaz, chacune de ces zones est munie en son coeur d'un premier capteur de température et en début de zone d'un second capteur de température.

Lorsque le différentiel de températures entre la température du coeur et du début de zone atteint un seuil déterminé, le filtre doit être régénéré.

L'inconvénient majeur de ce dispositif est lié au fait que le différentiel de températures relevées dans chaque zone du filtre peut ne pas être représentatif de l'encrassement de cette zone

En effet, en cas de brusque encrassement de la totalité de la zone du filtre, le différentiel de température reste constant tout en n'atteignant pas le seuil de déclenchement de régénération.

La présente invention permet d'améliorer ces technologies en réalisant en outre une évaluation locale de l'encrassement, comme celà est déjà connu du document EP-A-0 829 622.

Plus spécifiquement, il s'agit selon l'invention d'évaluer la perméabilité locale d'un filtre à particules et donc son encrassement puis d'activer et de moduler la régénération en conséquence.

De plus, ces différentes actions peuvent être réalisées en temps réel, de façon précise et fiable.

Le flux de gaz à épurer traverse le filtre à particules sur toute sa longueur et il est constitué de plusieurs zones juxtaposées également susceptibles d'être chacune traversées de part en part par le flux de gaz à épurer.

Ainsi l'invention a pour objet un procédé d'évaluation de la perméabilité locale d'un filtre à particules qui consiste à
- implanter plusieurs résistances (Ri) dans plusieurs zones du filtre et une résistance (Ro) en amont du filtre;
- mesurer la température dudit flux en amont dudit filtre par la résistance (Ro) implantée en amont dudit filtre;
- mesurer la température en au moins une desdites zones constituant le filtre par les résistances (Ri) implantées dans lesdites zones ;
- évaluer l'inertie thermique de l'une au moins desdites zones via la mesure relative de la température locale vis-à-vis de ladite température en amont du filtre;
- régénérer localement ledit filtre, lorsque ladite inertie thermique est supérieure à un certain seuil, par un chauffage local produit par les résistances (Ri) implantées dans le filtre; et
- implanter au moins une vanne (Vi) en amont d'au moins une zone du filtre et à en moduler indépendamment l'ouverture en fonction de la régénération locale souhaitée.

Conformément à l'invention, on utilise en outre la mesure de chacune des résistances locales en elle-même pour moduler l'ouverture de chaque vanne associée.

Par ailleurs, on peut mémoriser séparément la mesure de chacune des résistances locales pour déterminer un colmatage ou une rupture de ladite résistance.

Sans sortir du cadre de l'invention, on régénère d'abord les zones les plus encrassées.

Additionnellement, le procédé selon l'invention peut consister à injecter localement et indépendamment, des hydrocarbures, dans l'une au moins desdites zones du filtre.

La présente invention concerne également un dispositif d'évaluation de la perméabilité locale et de régénération locale sur toute sa longueur d'un filtre à particules constitué de plusieurs zones juxtaposées et traversé par un flux de gaz à épurer, caractérisé en ce qu'il comprend plusieurs résistances implantées dans plusieurs zones du filtre, une résistance implantée en amont du filtre, un moyen d'évaluation de l'inertie thermique d'au moins une zone du filtre associé aux mesures de températures effectuées par les résistances en amont dudit filtre et en différents points à l'intérieur du filtre, un moyen de régénération locale dudit filtre par un chauffage local produit par les résistances implantées dans le filtre et au moins une vanne disposée en amont d'une zone du filtre, associée à la régénération locale dudit filtre.

Avantageusement, il comprend en outre un moyen d'injection local d'hydrocarbures dans l'une au moins desdites zones du filtre, associé à la régénération locale dudit filtre.

Conformément à l'invention, le dispositif d'évaluation de la perméabilité locale peut comprendre en outre un moyen de détection du dysfonctionnement de l'une au moins des zones du filtre.

Ce moyen peut permettre de détecter un colmatage et/ou une rupture de l'une au moins des zones du filtre.

D'autres caractéristiques, avantages, détails de l'invention apparaîtront mieux à la lecture de la description qui va suivre, faite à titre illustratif et nullement limitatif en référence aux figures annexées sur lesquelles :
- La fig. 1 est un schéma de principe d'un mode de réalisation de l'invention;
- La fig. 2 montre un ensemble de courbes de l'évolution de la température en fonction du temps dans différentes zones et en amont du filtre à particules selon l'invention;
- La fig. 3 est un organigramme montrant les principales étapes du fonctionnement de l'invention.

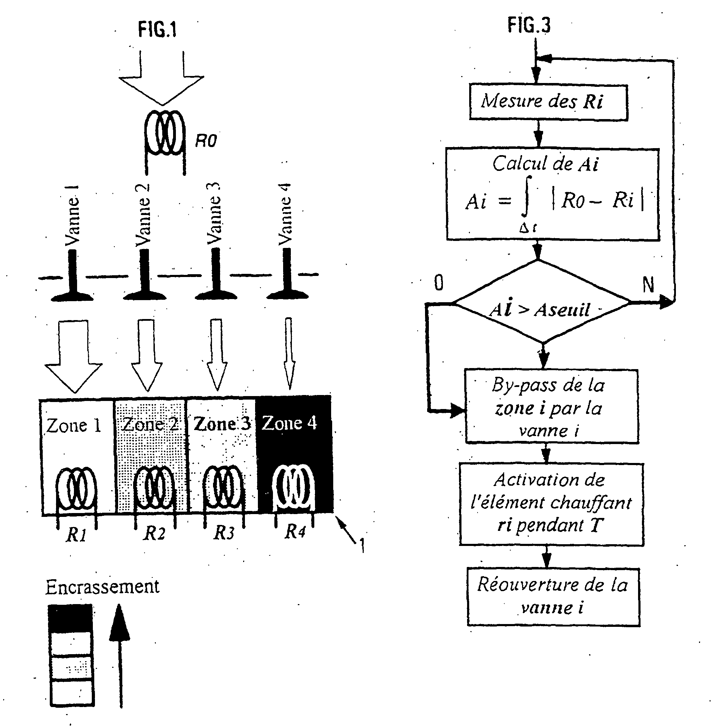

Comme il est visible sur la fig. 1, l'invention comporte un filtre à particules 1 divisé en plusieurs secteurs (ici zones 1 à 4) chacun susceptible d'être traversé sur toute sa longueur par le flux à épurer. Dans le cas d'un filtre de type "wall-flow", chaque zone représentera un ensemble défini de canaux ; dans le cas de filtres basés sur un arrangement de fibres, un secteur représentera un tronçon de cartouche par exemple. Ces différentes zones peuvent être chauffés séparément par des résistances électriques locales (Ri) qui permettent, lorsqu'on les active, des régénérations partielles du filtre. L'utilisation d'un chauffage local présente plusieurs intérêts :
- La puissance nécessaire au déclenchement de la combustion est faible, le dimensionnement de chaque résistance permet de rendre celle-ci compatible avec les ressources de puissance disponibles.
- Pour une gamme importante de points de fonctionnement moteur, la régénération d'une partie limitée du filtre permet de retrouver une contre-pression proche de la contre-pression à vide car la dimension totale du filtre est adaptée au débit maximal de gaz (puissance maxi).
- L'activation d'un point chaud localisé en un seul endroit du filtre peut permettre de créer un foyer de combustion lente qui propage la combustion aux autres zones du filtre, ce qui maintient sur la durée une faible contre-pression.
- Les conditions de chauffage (nombre de résistances actives, durée d'activation...) peuvent être optimisées en fonction des conditions moteur, des conditions d'encrassement et de la puissance disponible.
- La répartition spatiale d'énergie introduite dans le filtre étant modulable, ceci permet d'éviter l'accumulation locale trop forte de particules, ce qui est un atout pour la durabilité du support filtrant.

Sans sortir du cadre de l'invention, des capteurs de températures peuvent être disposés dans une ou plusieurs zones du filtre 1, afin de donner une mesure de la température dans chacune de ces zones.

Par ailleurs, le système selon l'invention peut également comporter des vannes Vi (ici vannes 1 à 4) permettant de réguler le flux de gaz dans chaque secteur du filtre ou dans différents groupes de secteurs. Ces vannes présentent divers intérêts :
- Elles permettent de répartir l'encrassement de manière inhomogène, ce qui optimise la relation entre la masse totale chargée dans l'ensemble du filtre et la contre-pression. La répartition est inhomogène à la fois au niveau de la nature de l'encrassement et de sa quantité.
- Les différentes vannes Vi favorisent le chauffage des différents secteurs Zi et entretiennent donc leur régénération en régulant la répartition du débit de gaz.

L'invention comprend en outre une résistance générale Ro disposée en amont du filtre à particules 1 lui-même, c'est-à-dire en amont de l'ensemble des résistances Ri.

Cette résistance Ro, ainsi que les différentes résistances Ri implantées dans les différentes zones, varient comme la température du gaz qui les entoure. On a ainsi une mesure indirecte de la température du flux gazeux en amont du filtre, ainsi que de la température "locale" dans chacune des zones constituant le filtre.

Sans sortir du cadre de l'invention, un moyen de mesure directe de la température tel qu'un thermocouple par exemple, peut être placé en amont du filtre 1.

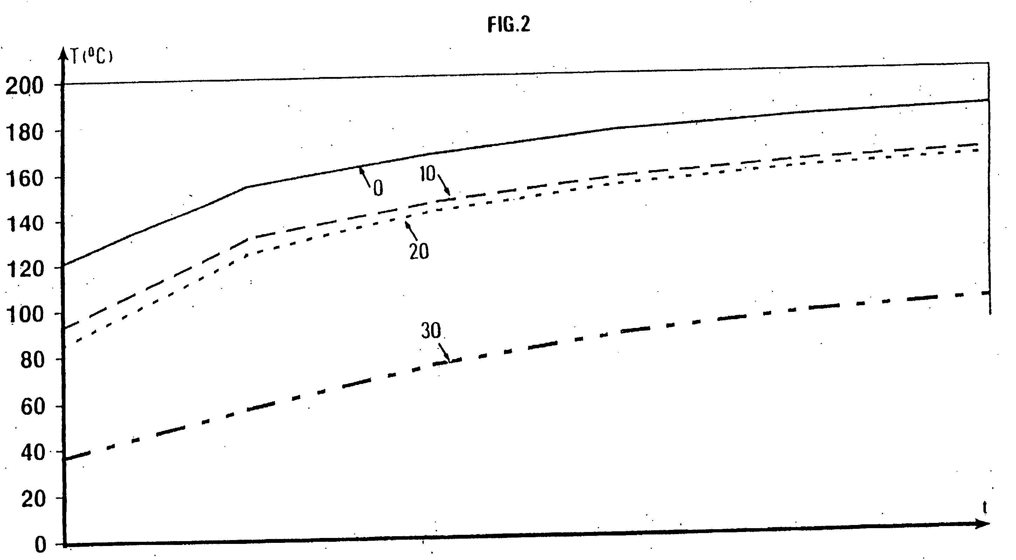

La figure 2 montre l'évolution de la température des différentes zones (courbes 10, 20, 30) du filtre 1 et en amont du filtré (courbe 0). On voit que la variation de la température dans les différentes zones présente un certain décalage vis-à-vis de la température en amont du filtre. Ce décalage dépend directement du débit de gaz traversant chaque zone, c'est-à-dire de l'encrassement de chaque zone.

Le principe de fonctionnement de l'invention repose donc sur une évaluation relative du débit local des gaz traversant le milieu filtrant, lequel est directement dépendant de la perméabilité locale du milieu et donc de son niveau d'encrassement. Ceci n'est possible que parce que le flux gazeux traverse le filtre de part en part, sur toute sa longueur.

Ainsi, l'encrassement local- est évalué à partir de l'inertie thermique d'une zone d'un filtre à particules; selon la fig. 2, la zone la plus encrassée correspond à la courbe 30 puisque sa température ne "suit" pas celle de la courbe 0. On constante un léger changement de pente de la courbe 30 bien après celui de la courbe 0. L'inertie thermique de la zone correspondante est donc très importante.

A contrario les courbes 10 et 20, par ailleurs très proches l'une de l'autre, ne présentent pratiquement aucun retard vis-à-vis de la courbe 0 ; le changement de pente se produit quasiment au même instant. Les zones correspondantes du filtre présentent donc un débit sensiblement égal à celui de la zone située en amont du filtre. Elles sont donc peu encrassées.

Selon l'invention, les différentes inerties thermiques sont évaluées en temps réel via la mesure relative des résistances locales (Ri) vis-à-vis de la . résistance générale (Ro), ou encore via la mesure relative des températures locales vis-à-vis de la température mesurée en amont du filtre.

La fig. 3 illustre plus en détail le traitement des mesures selon un mode de réalisation de l'invention, tel qu'illustré par la figure 1:

Les résistances locales Ri ainsi que la résistance Ro sont mesurées à intervalles de temps prédéfinis, par exemple toutes les secondes. Puis on calcule Ai la valeur absolue de la différence entre Ro et chacune des résistances locales Ri.

Ensuite on compare la valeur de Ai à un seuil A seuil qui est en fait la différence maximale tolérée. Si Ai est inférieur à ce seuil, alors on continue les calculs sans autre changement. Si Ai est supérieur au seuil fixé alors on actionne la vanne Vi correspondante à la zone encrassée afin de dériver le flux en dehors de la zone. Parallèlement, on active l'élément chauffant correspondant pendant une durée prédéterminée afin de régénérer localement la zone qui vient d'être jugée encrassée.

Une fois le laps de temps terminé, on considère que la régénération est effectuée c'est-à-dire que la zone i n'est plus encrassée. On ouvre donc à nouveau la vanne Vi correspondante afin que le flux traverse à nouveau cette zone.

En outre la mesure de chaque résistance locale Ri peut être utilisée intrinsèquement (en absolu) afin de moduler l'ouverture de la vanne correspondante Vi pendant la régénération. Ceci permet d'optimiser le chauffage jusqu'à la température d'initiation, de doser l'apport d'oxygène pour l'entretien de la combustion, ou au contraire d'étouffer la combustion en cas de dégagement thermique trop important.

En outre les mesures locales de résistance peuvent être mises à profit pour détecter des incidents tels que la rupture d'une zone du filtre 1... .

L'ensemble des mesures selon l'invention peut, d'une façon générale, participer au diagnostic général de contrôle électronique du moteur.

Ainsi la présente invention présente les avantages suivants :

Il permet une évaluation locale de l'encrassement ce qui optimise les stratégies de traitement local de la régénération;

Il évite notamment de colmater des zones trop importantes du filtre, ce qui pénalise le fonctionnement du moteur à pleine charge.

Par ailleurs la présente invention permet d'intervenir très tôt, avant que la quantité de suies déposées ne conduise à des dégagements thermiques trop importants.

En outre, en choisissant de régénérer d'abord les zones les plus encrassés, l'efficacité de régénération est optimale puisque la propagation spontanée de la régénération aux zones moins encrassées est quasi certaine. Il n'est plus nécessaire de créer artificiellement une autre régénération.

Les différentes résistances locales peuvent être utilisées pour détecter des dégradations structurelles du filtre ; ou encore des colmatages définitifs. Leur valeur intrinsèque permet en effet ce gendre de diagnostic.

Par ailleurs, en fonction de la perméabilité locale détectée selon l'invention, il est possible d'injecter des hydrocarbures sur une ou plusieurs zones du filtre 1 ; ceci afin de favoriser la combustion c'est-à-dire la régénération dans l'une ou l'autre des zones.

## Revendications

1. Procédé d'évaluation de la perméabilité locale et de régénération locale d'un filtre à particules (1) constitué de plusieurs zones juxtaposées et traversé sur toute sa longueur par un flux de gaz à épurer, consistant à :
- implanter plusieurs résistances (Ri) dans lesdites zones du filtre et une résistance (Ro) en amont du filtre;
- mesurer la température dudit flux en amont dudit filtre par la résistance (Ro) implantée en amont dudit filtre;
- mesurer la température en au moins une desdites zones constituant le filtre par les résistances (Ri) implantées dans lesdites zones ;
- évaluer l'inertie thermique de l'une au moins desdites zones via la mesure relative de la température locale vis-à-vis de ladite température en amont du filtre;
- régénérer localement ledit filtre, lorsque ladite inertie thermique est supérieure à un certain seuil, par un chauffage local produit par les résistances (Ri) implantées dans le filtre; et
- implanter au moins une vanne (Vi) en amont d'au moins une zone du filtre et à en moduler indépendamment l'ouverture en fonction de la régénération locale souhaitée.

2. Procédé selon la revendication 1, **caractérisé en ce que** l'on utilise en outre la mesure de chacune des résistances locales (Ri) en elle-même pour moduler l'ouverture de chaque vanne associée.

3. Procédé selon l'une quelconque des revendications 1 ou 2, **caractérisé en ce que** l'on mémorise séparément la mesure de chacune des résistances locales (Ri) pour déterminer un colmatage ou une rupture de l'une au moins des zones du filtre.

4. Procédé selon l'une quelconque des revendications précédentes, **caractérisé en ce que** l'on régénère d'abord les zones les plus encrassées.

5. Procédé selon l'une quelconque des revendications précédentes, **caractérisé en ce qu'**il consiste en outre à injecter localement et indépendamment, des hydrocarbures, dans l'une au moins desdites zones du filtre.

6. Dispositif d'évaluation de la perméabilité locale et de régénération locale sur toute sa longueur d'un filtre à particules (1) constitué de plusieurs zones juxtaposées et traversé par un flux de gaz à épurer, **caractérisé en ce qu'**il comprenne plusieurs résistance (Ri) implantées dans lesdites zones du filtre, une résistance (Ro) implantée en amont du filtre, un moyen d'évaluation de l'inertie thermique d'au moins une zone du filtre associé aux mesures de températures effectuées par les résistances (Ri, Ro) en amont dudit filtre et en différents points à l'intérieur du filtre, un moyen de régénération locale dudit filtre par un chauffage local produit par les résistance (Ri) implantées dans le filtre et au moins une vanne (Vi) disposée en amont d'une zone du filtre, associée à la régénération locale dudit filtre.

7. Dispositif selon la revendication 6, **caractérisée en ce qu'**il comprend en outre un moyen d'injection local d'hydrocarbures dans l'une au moins desdites zones du filtre, associé à la régénération locale dudit filtre.

8. Dispositif selon l'une quelconque des revendications 6 ou 7, **caractérisé en ce qu'**il comprend en outre un moyen de détection du dysfonctionnement de l'une au moins des zones du filtre.

9. Dispositif selon la revendication 8, **caractérisé en ce que** ledit moyen permet de détecter un colmatage de l'une au moins des zones du filtre.

10. Dispositif selon l'une quelconque des revendications 8 ou 9, **caractérisé en ce que** ledit moyen permet de détecter une rupture de l'une au moins des zones du filtre.

## Patentansprüche

1. Verfahren zur Auswertung der lokalen Permeabilität und der lokalen Regeneration eines aus mehreren nebeneinanderliegenden Bereichen aufgebauten und auf seiner gesamten Länge von einem Reinigungs-Gasstrom durchsetzten Partikelfilters (1), bestehend aus:
- dem Einbringen mehrerer Widerstände (Ri) in die besagten Bereiche des Filters und eines Widerstandes (Ro) stromaufwärts des Filters;
- dem Messen der Temperatur des besagten Stroms stromaufwärts des Filters durch den stromaufwärts des besagten Filters eingebauten Widerstand (Ro);
- dem Messen der Temperatur in mindestens einem der besagten, den Filter bildenden Bereiche mittels den in die besagten Bereiche eingebauten Widerständen (Ri);
- dem Auswerten des Wärmeleitwiderstandes von mindestens einem der besagten Bereiche über die relative Messung der lokalen Temperatur im Verhältnis zu der besagten Temperatur stromaufwärts des Filters;
- dem lokalen Regenerieren des besagten Filters durch eine von den in den Filter eingebauten Widerständen (Ri) erzeugte lokale Erwärmung, wenn der besagte Wärmeleitwiderstand oberhalb einer bestimmten Schwelle liegt; und
- dem Einbauen von mindestens einem Ventil (Vi) stromaufwärts von mindestens einem Bereich des Filters und aus dem unabhängigen Modulieren der Öffnung in Abhängigkeit der gewünschten lokalen Regenerierung mit diesem.

2. Verfahren nach dem Anspruch 1, **dadurch gekennzeichnet, daß** man außerdem die Messung von jedem der lokalen Widerstände (Ri) selber verwendet, um die Öffnung von jedem zugehörigen Ventil zu modulieren.

3. Verfahren nach einem beliebigen der Ansprüche 1 oder 2, **dadurch gekennzeichnet, daß** man die Messung von jedem der lokalen Widerstände (Ri) getrennt abspeichert, um eine Verstopfung oder eine Unterbrechung mindestens eines der Bereiche des Filters festzustellen.

4. Verfahren nach einem beliebigen der vorhergehenden Ansprüche, **dadurch gekennzeichnet, daß** man als erstes die am meisten verstopften Bereiche regeneriert.

5. Verfahren nach einem beliebigen der vorhergehenden Ansprüche, **dadurch gekennzeichnet, daß** es außerdem aus lokalem und unabhängigem Einspritzen von Kohlenwasserstoffen in mindestens einen der besagten Bereiche des Filters besteht.

6. Vorrichtung zur Auswertung der lokalen Permeabilität und der lokalen Regeneration auf seiner gesamten Länge eines aus mehreren nebeneinanderliegenden Bereichen aufgebauten und von einem Reinigungs-Gasstrom durchsetzten Teilchenfilters (1), **dadurch gekennzeichnet, daß** sie mehrere in die besagten Bereiche des Filters eingebaute Widerstände (Ri), einen stromaufwärts des Filters eingebauten Widerstand (Ro), ein mit den mittels der Widerstände (Ri, Ro) stromaufwärts des besagten Filters und an verschiedenen Punkten im Innern des Filters durchgeführten Temperaturmessungen zusammenhängendes Mittel zur Auswertung des Wärmeleitwiderstandes von mindestens einem Bereich des Filters, ein Mittel zur lokalen Regeneration des besagten Filters durch eine von den in den Filter eingebauten Widerständen (Ri) erzeugte lokale Erwärmung, und mindestens ein mit der lokalen Regeneration des besagten Filters in Zusammenhang stehendes, stromaufwärts von einem Bereich des Filters angeordnetes Ventil (Vi) umfaßt.

7. Vorrichtung nach dem Anspruch 6, **dadurch gekennzeichnet, daß** sie außerdem ein Mittel zur lokalen Einspritzung von Kohlenwasserstoffen in mindestens einen der besagten Bereiche des Filters umfaßt, welches mit der lokalen Regeneration des besagten Filters in Zusammenhang steht.

8. Vorrichtung nach einem beliebigen der Ansprüche 6 oder 7, **dadurch gekennzeichnet, daß** sie außerdem zusätzlich ein Mittel zur Erfassung einer Fehlfunktion mindestens eines der Bereiche des Filters umfaßt.

9. Vorrichtung nach dem Anspruch 8, **dadurch gekennzeichnet, daß** das besagte Mittel es erlaubt, eine Verstopfung von mindestens einem der Bereiche des Filters zu erfassen.

10. Vorrichtung nach einem beliebigen der Ansprüche 8 oder 9, **dadurch gekennzeichnet, daß** das besagte Mittel es erlaubt, einen Riß von mindestens einem der Bereiche des Filters zu erfassen.

## Claims

1. Method for evaluation of the local permeability and local regeneration of a particulate filter (1) constituted by a plurality of juxtaposed zones and having a stream of gas to be cleaned passing through its entire length, consisting in:
- installing a plurality of resistances (Ri) in said zones of the filter and a resistance (Ro) upstream of the filter;
- measuring the temperature of said stream upstream of said filter by means of the resistance (Ro) installed upstream of said filter;
- measuring the temperature in at least one of said zones constituting the filter by means of the resistances (Ri) installed in said zones;
- evaluating the thermal inertia of at least one of said zones by means of the relative measurement of the local temperature in relation to said temperature upstream of the filter;
- locally regenerating said filter when said thermal inertia exceeds a certain threshold by local heating produced by the resistances (Ri) installed in the filter, and
- installing at least one valve (Vi) upstream of at least one zone of the filter and independently modulating the opening thereof as a function of the desired local regeneration.

2. Method according to claim 1, **characterised in that** in addition use is made of the measurement of each of the local resistances (Ri) in itself to modulate the opening of each associated valve.

3. Method according to any one of claims 1 or 2, **characterised in that** the measurement of each of the local resistances (Ri) is memorised separately to determine clogging or breaking of at least one of the zones of the filter.

4. Method according to any one of the preceding claims, **characterised in that** the most clogged zones are regenerated first of all.

5. Method according to any one of the preceding claims, **characterised in that** it additionally consists in locally and independently injecting hydrocarbons into at least one of said zones of the filter.

6. Device for evaluation of the local permeability and local regeneration over its entire length of a particulate filter (1) constituted by a plurality of juxtaposed zones and having a stream of gas to be cleaned passing through it, **characterised in that** it comprises a plurality of resistances (Ri) installed in said zones of the filter, a resistance (Ro) installed upstream of the filter, a means of evaluation of the thermal inertia of at least one zone of the filter associated with the temperature measurements carried out by means of the resistances (Ri, Ro) upstream of said filter and at different points inside the filter, a means for local regeneration of said filter by local heating produced by the resistances (Ri) installed in the filter and at least one valve (Vi) disposed upstream of a zone of the filter associated with the local regeneration of said filter.

7. Device according to claim 6, **characterised in that** it additionally comprises a local means for injection of hydrocarbons into at least one of said zones of the filter associated with the local regeneration of said filter.

8. Device according to any one of claims 6 or 7, **characterised in that** it additionally comprises a means for detecting dysfunction of at least one of the zones of the filter.

9. Device according to claim 8, **characterised in that** said means makes it possible to detect clogging of at least one of the zones of the filter.

10. Device according to any one of claims 8 or 9, **characterised in that** said means makes it possible to detect a break in at least one of the zones of the filter.
